# EUROPÄISCHE PATENTSCHRIFT

(11) **EP 3 428 578 B1**
(45) Veröffentlichungstag und Bekanntmachung des Hinweises auf die Patenterteilung: **27.10.2021**
(21) Anmeldenummer: 18172404.8
(22) Anmeldetag: 15.05.2018
(51) Int. Cl.: G01C 21/16, B64G 1/36, G01C 23/00, G05D 1/10, B64G 1/28, F42B 15/08

(54) **INERTIALSENSORSYSTEM FÜR FLUGKÖRPER**
INERTIAL SENSOR SYSTEM FOR MISSILE
SYSTÈME CAPTEUR INERTIEL POUR ENGIN BALISTIQUE

(30) Priorität: 12.07.2017 DE 102017006612
(43) Veröffentlichungstag der Anmeldung: 16.01.2019
(73) Patentinhaber: MBDA Deutschland GmbH, 86529 Schrobenhausen (DE)
(72) Erfinder: NEWZELLA, Alfons, 82239 Alling (DE); SCHODER, Johannes, 86676 Ehekirchen (DE)
(74) Vertreter: Isarpatent

(56) Entgegenhaltungen:
- EP-A1- 2 581 748
- EP-B1- 1 020 699
- WO-A1-2017/048839
- US-A- 4 914 598
- US-A1- 2013 221 195

## Beschreibung

### TECHNISCHES GEBIET DER ERFINDUNG

Die Erfindung betrifft ein insbesondere modular gestaltetes Inertialsensorsystem für Flugkörper, einen Flugkörper mit einem derartigen Inertialsensorsystem sowie Verfahren zur Inertialsensormessung während des Fluges eines Flugkörpers.

### TECHNISCHER HINTERGRUND

Leichte Flugkörper wie etwa Lenkflugkörper oder Lenkgranaten, werden oft mit einem inertialen Navigations- oder Regelsystem (Trägheitsnavigationssystem) ausgestattet. Aufgrund der erhöhten Fehleranfälligkeit inertialer Navigationssysteme werden in derartigen leichten Flugkörpern häufig weitere bzw. zusätzliche Sensoren integriert, deren Signale weitere Informationen zur Lage des Flugkörpers liefern und zur Fehlererkennung bzw. gegebenenfalls Fehlerkorrektur von Ausgabewerten des inertialen Navigationssystems dienen. Um die Steuerung von leichten Flugkörpern zu optimieren, können alle Sensorsignale durch Kalman-Filter plausibilisiert werden, die als weitere Basisgrößen dynamische Messdaten wie etwa Altimeterdaten, Daten eines globalen Navigationssatellitensystems oder Messdaten eines Magnetometers verwenden können.

Häufig treten dabei gegensätzliche Anforderungen auf, da für leichte Flugkörper einerseits qualitativ hochwertige Steuerfunktionen in einer hinreichenden Sicherheitsanforderungsstufe gemäß IEC 61508/IEC61511 mit ausreichendem Messbereich, guter Fehlertoleranz und hoher Bandbreite wünschenswert sind, die dafür zu nutzenden Inertialsensoriksysteme allerdings auf der anderen Seite auch kosteneffizient sein sollen.

In der Druckschrift DE 10 2011 115 971 A1 beispielsweise wird ein Verfahren zur Bestimmung von inertialen Messgrößen mittels einer Inertialsensoren aufweisenden inertialen Messeinheit vorgeschlagen, bei dem mindestens zwei Inertialsensoren unterschiedlicher Erfassungsgenauigkeit jeweils die gleiche Messgröße unabhängig voneinander in nur teilweise disjunkten Messgrößenwertebereichen erfassen und die erfassten Messgrößenwerte zur Bildung eines fehlerbereinigten Messsignals zusammenzufassen.

Die Druckschrift EP 2 352 968 A1 offenbart eine Inertialmesseinheit mit Sensorclustern ausjeweils mehreren kostengünstigen MEMS-Inertialsensoren geringer Messgenauigkeit.

Die EP 2 581 748 A1 beschreibt ein Inertialsensorensystem mit mehreren Inertialsensorbasismodulen, die jeweils mindestens zwei Intertialsensoren aufweisen, welche die gleiche Messgröße erfassen, wobei diese Inertialsensoren einer jeweiligen Inertialmesseinheit jeweils verschiedene Erfassungsgenauigkeiten, aber zumindest teilweise überlappende Messgrößenwertebereiche aufweisen. Das Inertialsensorsystem weist je Raumachse jeweils zwei redundante Drehratenssensoren und jeweils zwei redundante Beschleunigungssensoren auf, wobei die Messwertausgaben aller dieser Sensoren einem zentralen Steuerprozessor zugeführt werden. Ein ähnliches System wird in der US 4 914 598 A offenbart, wobei die einzelnen Inertialsensorbasismodule zusätzlich einen eigenen Steuerprozessor zur Verarbeitung der von den Inertialsensoren erfassten Daten aufweisen, wobei die einzelnen Steuerprozessoren die verarbeiteten Daten an einen zentralen Steuerprozessor ausgeben.

### ZUSAMMENFASSUNG DER ERFINDUNG

Eine der Aufgaben der Erfindung besteht darin, Lösungen für genaue und langzeitstabile Inertialsensorsysteme zum Einsatz in Flugkörpern zu finden, die einfach und kostengünstig zu implementieren sind.

Diese und andere Aufgaben werden durch ein modulares Inertialsensorsystem mit den Merkmalen des Anspruchs 1 sowie einen Flugkörper mit den Merkmalen des Anspruchs 8 gelöst.

Gemäß einem ersten Aspekt der Erfindung umfasst ein Inertialsensorsystem für den Einsatz in einem Trägheitsnavigationssystem eines Flugkörpers ein erstes Inertialsensorbasismodul, ein zweites Inertialsensorbasismodul, und ein systemübergreifendes Steuersystem. Das erste Inertialsensorbasismodul weist mindestens zwei erste Inertialsensoren eines ersten Inertialsensortyps und mindestens zwei zweite Inertialsensoren eines zweiten, von den erstem Inertialsensortyp verschiedenen Inertialsensortyps auf. Das zweite Inertialsensorbasismodul weist mindestens zwei erste Inertialsensoren des ersten Inertialsensortyps und mindestens zwei zweite Inertialsensoren des zweiten, von den erstem Inertialsensortyp verschiedenen Inertialsensortyps auf. Das systemübergreifende Steuersystem umfasst einen zentralen Steuerprozessor, welcher mit dem ersten Inertialsensorbasismodul und dem zweiten Inertialsensorbasismodul gekoppelt ist, und welcher dazu ausgelegt ist, Sensormesswerte der ersten und zweiten Inertialsensoren des ersten Inertialsensorbasismoduls mit den Sensormesswerten der ersten und zweiten Inertialsensoren des zweiten Inertialsensorbasismoduls zu plausibilisieren.

Gemäß einem zweiten Aspekt der Erfindung umfasst ein Flugkörper ein Inertialsensorsystem gemäß dem ersten Aspekt der Erfindung.

Eine wesentliche Idee der Erfindung besteht darin, für einige oder alle Sensorarten eines Inertialsensorsystems zwei oder mehr redundante Sensoren vorzuhalten, die unterschiedliche Messeigenschaften aufweisen, wie etwa unterschiedliche Bandbreiten, unterschiedliche Vibrationsfestigkeiten, unterschiedliche Beschleunigungsfestigkeit, unterschiedliche Messgenauigkeiten, unterschiedliche Temperaturabhängigkeiten, unterschiedliche Verzerrungswerte ("bias"), unterschiedliche Langzeitstabilitätswerte, unterschiedliche Driftwerte oder dergleichen. Durch das Vorhalten mehrerer Sensoren pro Sensortyp kann eine zentrale Steuereinrichtung des Inertialsensorsystems die Messwerte der redundant vorhandenen Sensoren plausibilisieren und eine Fehlererkennung erleichtern. Dies ermöglicht es, eine leicht und kostengünstig skalierbare Redundanz zur effizienten Erreichung einer Sicherheitsanforderungsstufe zu schaffen.

Ein besonderer Vorteil in der erfindungsgemäßen Lösungen besteht darin, dass die Kosten und das benötigte Bauvolumen derartiger Inertialsensorsysteme signifikant gesenkt werden können, da die verwendeten Sensoren jeweils nur bezüglich einer geringeren Auswahl an Sensoreigenschaften optimiert werden müssen. Auf große, schwere und teure Sensoren, die alle gegenläufigen Anforderungen wie etwa einen weiten Messbereich bei hoher Messgenauigkeit gleichzeitig erfüllen müssen, kann daher vorteilhafterweise verzichtet werden.

Ein weiterer zentraler Effekt der Implementierung von redundanten Basismodulen besteht darin, dass die Wahrscheinlichkeit, Fehler in der Inertialsensormessung erkennen zu können, signifikant erhöht wird. Dies wird durch die Möglichkeit eines kreuzkorrelierten Abgleichs zwischen den Ausgaben der einzelnen Basismodule sichergestellt.

In dem erfindungsgemäßen Inertialsensorsystem weisen die ersten und zweiten Inertialsensorbasismodule jeweils einen Steuerprozessor auf, welcher dazu ausgelegt ist, die Sensormesswerte der ersten und zweiten Inertialsensoren zu verarbeiten und als Ausgabe über eine Systemschnittstelle zur Verfügung zu stellen. Dabei können in einigen Ausführungsformen die ersten und zweiten Inertialsensorbasismodule jeweils auf einer im Wesentlichen planaren Platine implementiert sein, die über Systemschnittstellen untereinander gekoppelt sind.

Erfindungsgemäß ist in dem zentralen Steuerprozessor eine "lock step"-Funktionalität implementiert, welche dazu eingerichtet ist, eine Ausgabe eines gesamten Sensorausgabewertes durch den zentralen Steuerprozessor erst dann zu veranlassen, wenn die Steuerprozessoren der einzelnen Inertialsensormodule als fehlerfrei abgeglichene Ausgabedaten pro Messperiode ausgegeben haben.

Vorteilhafte Ausgestaltungen und Weiterbildungen ergeben sich aus den weiteren Unteransprüchen.

Gemäß einigen Ausführungsformen des erfindungsgemäßen Inertialsensorsystems können die ersten und zweiten Inertialsensorbasismodule entlang der Flächennormalen der im Wesentlichen planaren Platinen gestapelt sein. Dabei kann in einigen Ausführungsformen auch das systemübergreifende Steuersystem auf einer im Wesentlichen planaren Platine implementiert und entlang der Flächennormalen der im Wesentlichen planaren Platine über oder unter den Inertialsensorbasismodulen gestapelt sein.

Gemäß einigen weiteren Ausführungsformen des erfindungsgemäßen Inertialsensorsystems kann der erste Inertialsensortyp Beschleunigungssensoren umfassen. Gemäß einigen weiteren Ausführungsformen des erfindungsgemäßen Inertialsensorsystems kann der zweite Inertialsensortyp Drehratensensoren umfassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine beispielhafte Illustration eines Inertialsensorsystems gemäß einer Ausführungsform der Erfindung;
Fig. 2 eine beispielhafte Illustration eines Inertialsensorsystems gemäß einer weiteren Ausführungsform der Erfindung;
Fig. 3 ein schematisches Blockschaubild eines Inertialsensorsystems gemäß einer weiteren Ausführungsform der Erfindung;
Fig. 4 ein schematisches Blockschaubild eines Inertialsensorsystems gemäß einer weiteren Ausführungsform der Erfindung;
Fig. 5 eine beispielhafte Illustration eines Flugkörpers mit einem Inertialsensorsystem gemäß einer weiteren Ausführungsform der Erfindung;
Fig. 6 eine beispielhafte Illustration eines Flugkörpers mit einem Inertialsensorsystem gemäß einer weiteren Ausführungsform der Erfindung;
Fig. 7 ein Flussdiagramm eines Verfahrens zur flugphasenabhängigen Inertialsensormessung bei einem Flugkörper gemäß einer weiteren Ausführungsform der Erfindung; und
Fig. 8 ein Flussdiagramm, welches beispielhafte Details des Verfahrens der Fig. 7 darstellt.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Flugkörper im Sinne der vorliegenden Erfindung umfassen alle ballistischen bzw. ungelenkten Flugkörper und Lenkflugkörper, die sich auf bestimmbaren Flugbahnen in und außerhalb des Luftraums bewegen können. Flugkörper im Sinne der vorliegenden Erfindung umfassen dabei insbesondere leichte Drohnen, Lenkraketen, Lenkgranaten, alle Arten von Marschflugkörpern, Bodenzielflugkörpern, Luft-Boden-Raketen, Panzerabwehrlenkwaffen, Seezielflugkörpern, Luftzielflugkörpern wie Luft-Luft-Raketen oder Flugabwehrraketen, Anti-Raketen-Raketen und Antisatellitenraketen.

Eine inertiale Messeinheit ("inertial measurement unit", IMU) im Sinne der vorliegenden Erfindung ist eine räumliche Kombination mehrerer Inertialsensoren wie Beschleunigungssensoren, Drehratensensoren und ähnlicher. IMUs sind sensorische Messapparaturen von Trägheitsnavigationssystemen ("inertial navigation system", INS), welche unter anderem bei Flugkörpern zur Flugnavigation und zur regelungstechnischen Stabilisierung des Flugkörpers im Raum eingesetzt werden. Zur Erfassung von sechs möglichen kinematischen Freiheitsgraden verfügt eine IMU üblicherweise mindestens über drei jeweils zueinander orthogonal eingebaute Beschleunigungssensoren (Translationssensoren) für die Erfassung der translatorischen Bewegung in x-, y- und z-Richtung sowie mindestens drei orthogonal zueinander angebrachte Drehratensensoren (gyroskopische Sensoren) für die Erfassung rotierender bzw. kreiselnder Bewegungen um die x-, y- und z-Achse. IMUs können daher als Messwerte mindestens drei lineare Beschleunigungswerte für die translatorische Bewegung und mindestens drei Winkelgeschwindigkeitswerte für die Drehraten liefern. In einem INS kann aus den linearen Beschleunigungswerten, gegebenenfalls nach Kompensation der Erdbeschleunigung, die lineare Geschwindigkeit entlang der Flugbahn und die Position im Raum bezogen auf einen Referenzpunkt ermittelt werden. Die Integration der drei Winkelgeschwindigkeitswerte liefert, bezogen auf einen Referenzpunkt, die Orientierung im Raum.

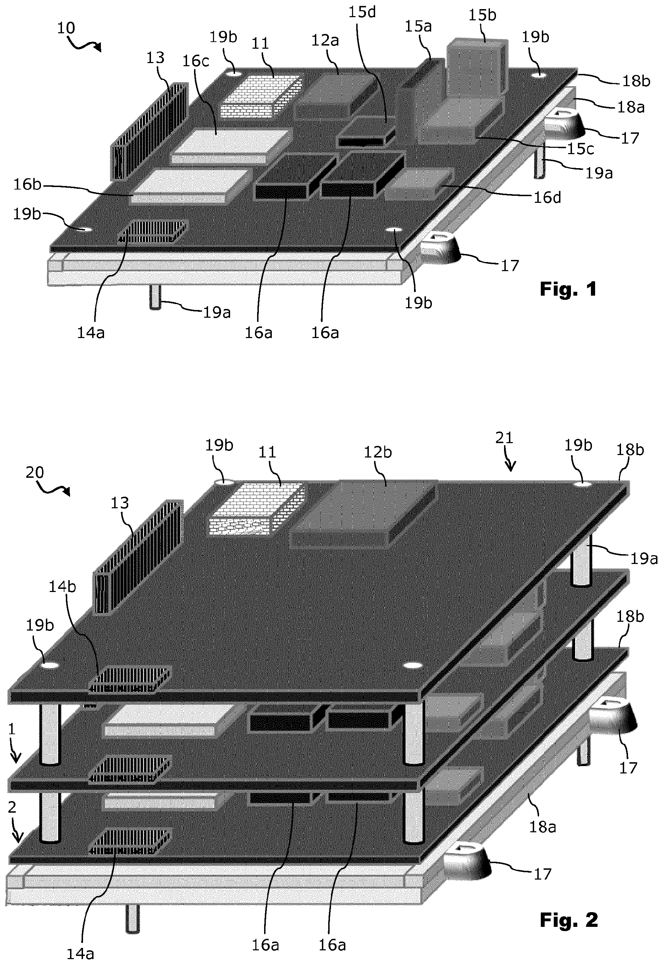

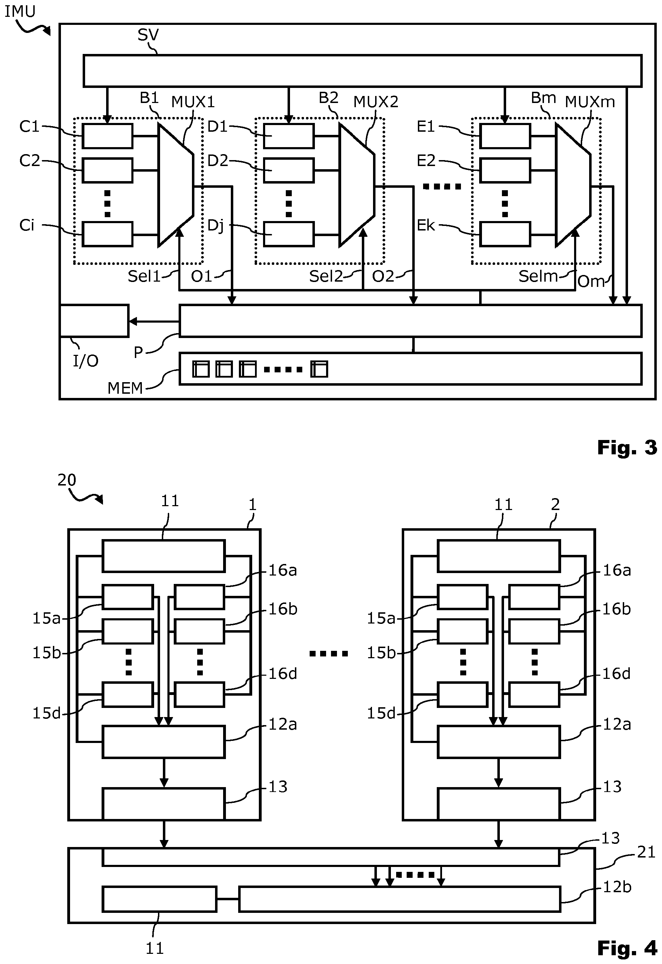

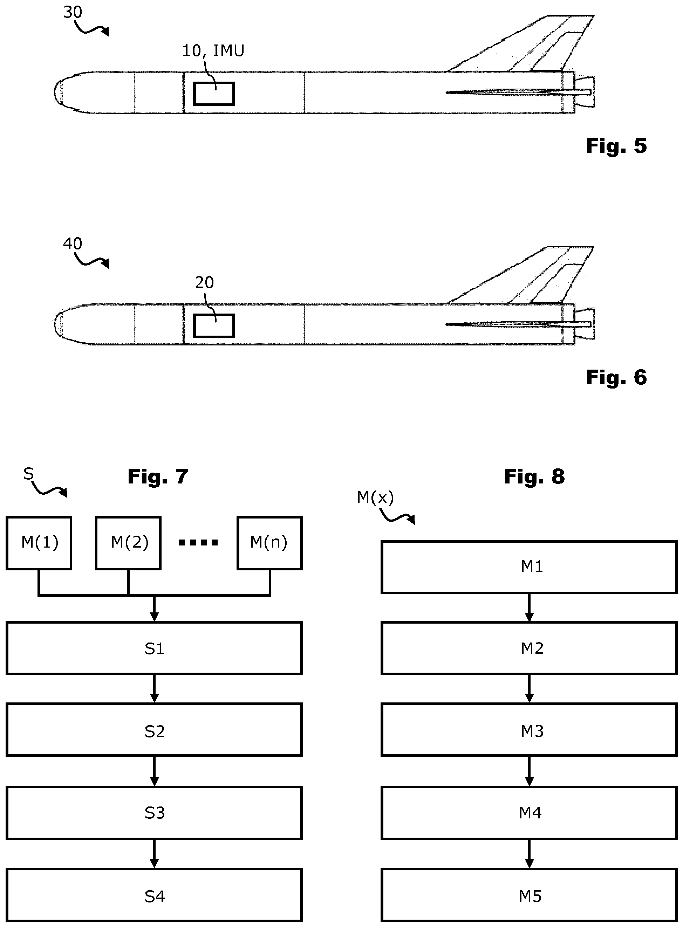

Fig. 1 zeigt eine beispielhafte Illustration eines Inertialsensorsystems 10. Die in Fig. 1 dargestellten Komponenten des Inertialsensorsystems 10 sind nur beispielhafter Natur und weitere Komponenten können im Zusammenhang mit dem Inertialsensorsystem 10 implementiert werden. Beispielsweise kann es möglich sein, dass für das Inertialsensorsystem 10 eine ähnliche oder analoge Funktionsweise wie im Zusammenhang mit dem in Fig. 3 in Blockschaubildweise gezeigten und weiter unten funktional erläuterten Inertialsensorsystem IMU implementiert wird. Das Inertialsensorsystem 10 kann beispielsweise Teil eines Trägheitsnavigationssystems (INS) sein, welches zum Beispiel für den Einsatz in einem Flugkörper konzipiert ist. Ein derartiger Flugkörper 30, welcher ein Inertialsensorsystem 10 (oder Inertialsensorsystem IMU) aufweisen kann, ist beispielhaft in Fig. 5 dargestellt. Dabei kann das Inertialsensorsystem 10 insbesondere als Strapdown-Inertialsensorsystem ausgebildet werden, das heißt, ein IMU, bei dem die Inertialsensoren des Inertialsensorsystems 10 fest mit dem äußeren Rahmen des Flugkörpers 30 verbunden sind. Insbesondere die Beschleunigungssensoren solcher Strapdown-Inertialsensorsysteme weisen dabei auch einen der Rotationsbewegung des Flugkörpers 30 zuzuschreibenden Sensormesswertanteil auf, welcher zur Bestimmung der translatorischen Beschleunigungswerte mithilfe von Sensorsignalwerte der Drehratensensoren kompensiert werden kann.

Das Inertialsensorsystem 10 umfasst eine Trägerplattform 18a, auf der eine Schaltplatine 18b aufgebracht ist. Die Trägerplattform 18a dient zur mechanischen Stabilisierung der Komponenten auf der Schaltplatine 18b und kann einerseits seitlich angeordnete Befestigungslaschen 17 zur Befestigung des Inertialsensorsystem 10 an einem Rahmen eines Flugkörpers, und andererseits Montagestifte 19a auf der Unterseite der Trägerplattform 18a aufweisen. Die Montagestifte 19a können dazu eingesetzt werden, mehrere Inertialsensorsysteme 10 übereinander zu stapeln, indem die Montagestifte 19a in deckungsgleich angeordneten Montageöffnungen 19b in der Schaltplatine 18b eines weiteren Inertialsensorsystems 10 eingesteckt werden. Die Montagestifte 19a dienen dabei einerseits der mechanisch stabilen Verbindung und andererseits als Abstandhalter zwischen den beiden gestapelten Inertialsensorsystemen 10. Die Anzahl der Montagestifte 19a und/oder Montageöffnungen 19b kann dabei variieren, auch wenn in Fig. 1 beispielhaft vier Montageöffnungen 19b dargestellt sind. Ebenso ist die Positionierung der Montageöffnungen 19b und der Montagestifte 19a in Bezug auf den Grundriss des im Wesentlichen planar ausgebildeten Inertialsensorsystems 10 nicht auf die in Fig. 1 beispielhaft dargestellte Positionierung in den Außenecken beschränkt. Ferner kann es möglich sein, andere Grundrissformen als die kreisrunde in Fig. 1 beispielhaft dargestellte Form für die Montageöffnungen 19b und die Montagestifte 19a zu wählen, beispielsweise polygonale Grundriss- bzw. Querschnittsformen.

Das Inertialsensorsystem 10 weist einen zentralen Steuerprozessor 12a auf, der über einen Energieversorgungsbaustein 11 mit elektrischer Energie versorgt wird. Der zentrale Steuerprozessor 12a kann beispielsweise ein ASIC, ein FPGA, ein PLD, ein digitaler Signalprozessor, ein Mikrocontroller oder eine andere geeignete portable Recheneinrichtung sein, die in der Lage ist, eingehende Sensorsignale zu verarbeiten und verarbeitete Sensorsignale in Ausgabewerte zu verwandeln, die an Eingabe-/Ausgabeschnittstellen 14a des Inertialsensorsystems 10 ausgegeben werden können. Das Inertialsensorsystem 10 kann neben den Eingabe-/Ausgabeschnittstellen 14a auch über systemverbindende Systemschnittstellen 13 verfügen, über die mehrere übereinander gestapelte Inertialsensorsysteme 10 bzw. deren Steuerprozessoren 12a miteinander kommunizieren und Daten austauschen können. Der zentrale Steuerprozessor 12a kann überdies über einen internen Speicher verfügen. Es kann auch möglich sein, dass ein separater (in Fig. 1 nicht explizit gezeigter) Speicherbaustein auf der Platine 18b vorgesehen wird, der mit dem zentralen Steuerprozessor 12a gekoppelt ist, und von dem der zentrale Steuerprozessor 12a gespeicherte Daten zur Verarbeitung abrufen kann.

Das Inertialsensorsystem 10 verfügt eine Anzahl von Inertialsensoren verschiedener Inertialsensortypen. Ein Inertialsensortyp ist dabei eine auf die Messung eines bestimmten Inertialsensorparameters ausgelegte Gruppe von Sensoren wie beispielsweise lineare Beschleunigungssensoren, Rotationsbeschleunigungssensoren, Drehratensensoren, gyroskopische Sensoren und ähnliche Sensortypen. Die physikalische Ausgestaltung eines Inertialsensors ist für die Zuordnung zu einem Inertialsensortyp unerheblich, wenn der fragliche Inertialsensor die gemäß dem Inertialsensortyp vorgegebenen Messwerte für den bestimmten Inertialsensorparameter ausgeben kann. Inertialsensoren innerhalb einer einem Inertialsensortyp zugeordnete Gruppe von Sensoren können sich hinsichtlich ihrer Messeigenschaften unterscheiden. Beispielsweise können Inertialsensoren des selben Inertialsensortyps unterschiedliche Bandbreiten, unterschiedliche Vibrationsfestigkeiten, unterschiedliche Beschleunigungsfestigkeit, unterschiedliche Messgenauigkeiten, unterschiedliche Temperaturabhängigkeiten, unterschiedliche Driftwerte ("bias"), unterschiedliche Langzeitstabilitätswerte oder unterschiedliche Skalenfaktorfehlerwerte aufweisen. Die Messeigenschaften der Inertialsensoren können über Kalibrationsprozeduren, beispielsweise unter Zuhilfenahme von Drehtischen, Zentrifugen oder Temperaturkammern, in Abhängigkeit von den Stimulationsparametern ermittelt werden und als Fehlerparameter gespeichert werden. Zu den jeweils ermittelten Messeigenschaften können Kompensationsparameter für die Ansteuerung der Inertialsensoren berechnet werden, mit denen die Ausgabewerte der jeweiligen Inertialsensoren vor einer Weiterverarbeitung in einem Steuerprozessor kompensiert werden können. Die Kompensationsparameter können für jeden verwendeten Inertialsensor in einem Konfigurationsdatensatz in einem Speicher des Inertialsensorsystems 10 gespeichert werden.

Das Inertialsensorsystem 10 kann beispielsweise drei raumachsgebundene gyroskopische Sensoren bzw. Drehratensensoren 15a, 15b, 15c aufweisen, die jeweils orthogonal zueinander fest auf der Platine 18b angeordnet sind. Das Inertialsensorsystem 10 kann beispielsweise zusätzlich einen dreidimensionalen gyroskopischen Sensor 15d aufweisen. Das Inertialsensorsystem 10 kann beispielsweise drei raumachsgebundene lineare Beschleunigungssensoren 16a, 16b, 16c aufweisen, die jeweils orthogonal zueinander fest auf der Platine 18b angeordnet sind. In manchen Fällen können für ein oder mehrere der linearen Beschleunigungssensoren 16a, 16b, 16c redundante Beschleunigungssensoren mit der gleichen Orientierung eingesetzt werden, wie in Fig. 1 beispielhaft für den linearen Beschleunigungssensor 16a gezeigt. Ferner kann das Inertialsensorsystem 10 beispielsweise zusätzlich einen dreidimensionalen linearen Beschleunigungssensor 16d aufweisen. Es sollte klar sein, dass Anzahl, Orientierung, relative Positionierung auf der Platine 18b und Dimensionierung der gezeigten Inertialsensoren 15a, 15b, 15c, 15d, 16a, 16b, 16c und 16d in Fig. 1 nur beispielhafter Natur sind und dass eine Vielzahl von anderen Implementierungsmöglichkeiten ebenso verwirklicht werden kann.

Fig. 2 zeigt einen Stapel aus zwei Inertialsensorsystemen 10 und einem systemübergreifenden Steuersystem 21, welches als oberste Stapelebene in Fig. 2 implementiert ist. Zusammen bilden die zwei Inertialsensorsysteme 10 und das Steuersystem 21 ein Inertialsensorsystem 20, welches die zwei Inertialsensorsysteme 10 als redundante Sensorsysteme zur Fehlererkennung und gegebenenfalls Fehlerkorrektur einsetzt. Es sollte klar sein, dass mehr als zwei Inertialsensorsysteme 10 in dem Inertialsensorsystem 20 eingesetzt werden können und dass die Platzierung des systemübergreifenden Steuersystem 21 in dem Stapel nicht notwendigerweise auf die oberste Ebene (wie in Fig. 2 beispielhaft gezeigt) begrenzt ist.

Das systemübergreifende Steuersystem 21 weist neben einem Energieversorgungsbaustein 11 einen zentralen Systemprozessor 12b auf, welcher über den Energieversorgungsbaustein 11 mit elektrischer Energie versorgt wird. Der zentrale Steuerprozessor 12b kann beispielsweise ein ASIC, ein FPGA, ein PLD, ein digitaler Signalprozessor, ein Mikrocontroller oder eine andere geeignete portable Recheneinrichtung sein, die in der Lage ist, eingehende Sensorsignale zu verarbeiten und verarbeitete Sensorsignale in Ausgabewerte zu verwandeln, die an Eingabe-/Ausgabeschnittstellen 14b ausgegeben werden können. Die Steuerprozessoren 12a und 12b des Inertialsensorsystems 20 sind über die systemverbindenden Systemschnittstellen 13 verbunden, über die die übereinander gestapelten Inertialsensorsysteme 10 bzw. deren Steuerprozessoren 12a untereinander und mit dem zentralen Steuerprozessor 12b des systemübergreifenden Steuersystems 21 kommunizieren und Daten austauschen können. Der zentrale Steuerprozessor 12b kann ebenfalls über einen internen Speicher verfügen. Es kann auch möglich sein, dass ein separater (in Fig. 2 nicht explizit gezeigter) Speicherbaustein auf der Platine 18b des systemübergreifenden Steuersystems 21 vorgesehen wird, der mit dem zentralen Steuerprozessor 12b gekoppelt ist, und von dem der zentrale Steuerprozessor 12b gespeicherte Daten zur Verarbeitung abrufen kann.

Der zentrale Steuerprozessor 12b kann die Ausgabedaten der zentralen Steuerprozessoren 12a aller Inertialsensorsysteme 10 empfangen und durch geeignete Plausibilisierungsmaßnahmen miteinander kombinieren. Beispielsweise können die einzelnen Inertialsensorsysteme 10 redundante Daten liefern, die die Ausfallsicherheit des Inertialsensorsystems 20 im Gesamten verringern. Es kann auch möglich sein, die einzelnen Inertialsensorsysteme 10 mit Inertialsensoren unterschiedlicher Messeigenschaften zu bestücken, um die Wahrscheinlichkeit des Auftretens identischer und damit schwer erkennbarer Fehler zu minimieren. In dem zentralen Steuerprozessor 12b ist eine "lock step"-Funktionalität implementiert, das heißt eine Ausgabe eines gesamten Sensorausgabewertes durch den zentralen Steuerprozessor 12b wird erst veranlasst, wenn die zentralen Steuerprozessoren 12a der einzelnen Inertialsensorsysteme 10 als fehlerfrei abgeglichene Ausgabedaten pro Messperiode ausgegeben haben. Damit kann eine duale modulare Redundanz erreicht werden, bei der das gesamte System 20 eine höhere Fehlertoleranz aufweisen kann. Zur Implementierung einer "lock step"-Funktionalität kann der zentrale Steuerprozessor 12b zwei Rechenkerne enthalten, die parallel die gleichen Befehle abarbeiten können und deren Ergebnisse dann gegenseitig bzw. kreuzkorreliert geprüft werden

Der zentrale Steuerprozessor 12b kann ferner dazu ausgelegt werden, eine eingebaute Selbsttestroutine ("built-in selftest", BIST) zu initiieren, um Messergebnisse von Inertialsensoren durch redundant vorhandene weitere Inertialsensoren zu plausibilisieren und gegebenenfalls ein Fehlverhalten zu erkennen und zu korrigieren.

Der modulare Aufbau des Inertialsensorsystems 20 ermöglicht skalierbare Aufbauten mit mehreren Basismodulen aus Inertialsensorsystemen 10, die über das systemübergreifende Steuersystem 21 zusammengekoppelt werden. Je nach Anzahl der Basismodule sind verschiedene Leistungsparameter möglich und die Konfiguration des Gesamtsystems lässt sich flexibel an jeweils erforderliche Sicherheitsanforderungen anpassen. Beispielsweise kann bereits mit drei Basismodulen dem Auftreten byzantinischer Fehler vorgebeugt werden: Durch Majoritätsentscheid kann ein singulärer Fehler auf einem der Module inklusive des Steuersystems 21 zuverlässig erkannt werden. Bei einem Einsatz von mehr als drei Basismodulen steigt dementsprechend die Wahrscheinlichkeit, einen Fehler als solchen sicher erkennen zu können.

Durch die Implementierung von mehreren redundanten Basismodulen kann die Wahrscheinlichkeit, dass Fehler in der Inertialsensormessung erkannt werden können, signifikant erhöht werden

Fig. 4 zeigt ein schematisches Blockschaubild eines Inertialsensorsystems 20, welches zwei Basismodule 1 und 2 sowie ein mit beiden Basismodulen gekoppeltes Steuersystem 21 aufweist. Die Energieversorgung 11 der Basismodule versorgt alle Inertialsensoren 15a, 15b, 15c, 15d, 16a, 16b, 16c und 16d mit elektrischer Energie, ebenso wie den zentralen Steuerprozessor 12a. Über systemverbindende Systemschnittstellen 13 werden die Sensormesswerte der einzelnen Inertialsensoren mittels des zentralen Steuerprozessors 12a der einzelnen Basismodule auf dem Steuersystem 21 zusammengeführt, wo der zentrale Steuerprozessor 12b des Steuersystems 21 eine Kombination und Evaluierung der eingehenden Sensormesswerte gemäß vorgebbarer Algorithmen vornimmt.

Das in den Fig. 2 und 4 dargestellte modulare Inertialsensorsystem 20 kann beispielsweise in einem Flugkörper 40 Einsatz finden, welches beispielhaft in Fig. 6 dargestellt wird. Das Inertialsensorsystem 20 kann beispielsweise Teil eines Trägheitsnavigationssystems (INS) sein, welches zum Beispiel für den Einsatz in einem Flugkörper konzipiert ist. Ein derartiger Flugkörper 40, welcher ein Inertialsensorsystem 20 (oder Inertialsensorsystem IMU) aufweisen kann, ist beispielhaft in Fig. 6 dargestellt. Dabei kann das Inertialsensorsystem 20 insbesondere als Strapdown-Inertialsensorsystem ausgebildet werden, das heißt, ein IMU, bei dem die Inertialsensoren des Inertialsensorsystems 20 fest mit dem äußeren Rahmen des Flugkörpers 40 verbunden sind. Insbesondere die Beschleunigungssensoren solcher Strapdown-Inertialsensorsysteme weisen dabei auch einen der Rotationsbewegung des Flugkörpers 40 zuzuschreibenden Sensormesswertanteil auf, welcher zur Bestimmung der translatorischen Beschleunigungswerte mithilfe von Sensorsignalwerte der Drehratensensoren kompensiert werden kann.

Der funktionale Ablauf einer Inertialsensormessung mithilfe des Inertialsensorsystems 20 wird in den Fig. 7 und 8 näher erläutert. Dabei stellt Fig. 7 den Verfahrensablauf eines Verfahrens zur Kombination von Inertialsensormesswerten in dem Steuersystem 21 dar, nachdem alle Rohdaten der Sensoren der Basismodule erfasst worden sind. Die Verarbeitung der Sensorendaten in den einzelnen Basismodulen, die der Verarbeitung gemäß dem Verfahren der Fig. 7 vorausgeht, wird in höherer Detailtiefe im Zusammenhang mit dem Flussdiagramm der Fig. 8 erläutert.

Nach einer (nicht explizit dargestellten) Initialisierungsphase aller Basismodule sowie des systemübergreifenden Steuersystems erfolgt in den Schritten M(x) mit x =1, ..., n zunächst eine Vorverarbeitung der Sensormesswerte innerhalb eines Basismoduls 1 bzw. 2 durch den jeweiligen zentralen Steuerprozessor 12a. Dabei werden in Schritt M1 zunächst alle Sensorrohdaten erfasst und in Schritt M2 mit Kalibrationsdaten kompensiert. In Schritt M3 werden, falls nicht hier schon Messbereichsüberschreitungen festgestellt worden sind, Messwerte gleichartiger Inertialsensoren miteinander verglichen und als plausibel eingestuft, falls eine vorgegebene Fehlerschwelle bei der Abweichung nicht überschritten wird. In Schritt M4 werden dann die plausibilisierten Inertialsensormesswerte von Sensoren gleichen Sensortyps optional fusioniert und in Schritt M5 als Basismodulausgabe durch den zentralen Steuerprozessor 12a über die Systemschnittstellen 13 ausgegeben. Dies erfolgt fürjedes der Basismodule 1, 2 separat.

Im Steuersystem 21 werden nach der Vorverarbeitung M(x) in einem Schritt S1 alle Basismodulausgaben gegebenenfalls Fehlermeldungen der Basismodule empfangen und verarbeitet. Dieser Schritt S1 kann im Lockstep-Modus erfolgen, um alle Basismodule synchronisiert zu halten. Falls hinreichend viele gültige Basismodulausgaben erhalten worden sind, können in Schritt S2 Abweichungen der einzelnen Basismodulausgaben voneinander detektiert werden. Dabei können parallele Abgleiche von Sensordaten, die dem gleichen Inertialsensortyp zuzuordnen sind, erfolgen, so dass bei einem Unterschreiten von vorgegebenen Maximalabweichungstoleranzen in Schritt S3 alle Basismodulausgaben sensortypabhängig fusioniert werden können und in Schritt S4 als Gesamtausgabe des Inertialsensorsystems 20 nach außen bereitgestellt werden können. Gegebenenfalls können vor der Fusionierung bei Auftreten von behebbaren Fehlern Maßnahmen zur Fehlerkorrektur eingeleitet werden bzw. bei einem Auftreten von nicht behebbaren Fehlern entsprechende Fehlermeldung nach außen generiert werden.

Fig. 3 zeigt ein Inertialsensorsystem IMU für den Einsatz in einem Trägheitsnavigationssystem eines Flugkörpers, wie beispielsweise dem in Fig. 5 dargestellten Flugkörper 30. Das Inertialsensorsystem IMU ist prinzipiell ähnlich dem Inertialsensorsystem 10 der Fig. 1 aufgebaut und setzt im Wesentlichen die Funktionalität der Bildung virtueller Sensorgruppensätze um. Dazu besitzt das Inertialsensorsystem 10 mindestens zwei Inertialsensormodule B1, B2, ..., Bm, welche jeweils Inertialsensoren des gleichen Inertialsensortyps aufweisen. Beispielsweise umfasst ein erstes Inertialsensormodul B1 mindestens zwei erste Inertialsensoren C1, ..., Ci eines ersten Inertialsensortyps und ein zweites Inertialsensormodul B2 mindestens zwei zweite Inertialsensoren D1, ..., Dj eines zweiten, von den erstem Inertialsensortyp verschiedenen Inertialsensortyps. Beispielsweise können die ersten Inertialsensoren C1, ..., Ci Beschleunigungssensoren und die zweiten Inertialsensoren D1, ..., Dj Drehratensensoren sein. Ein beispielhaft dargestelltes drittes Inertialsensormodul Bm kann mindestens zwei dritte Inertialsensoren E1, ..., Ek eines dritten, von den beiden ersten Inertialsensortypen verschiedenen Inertialsensortyps aufweisen. Es sollte klar sein, dass die Variablen i, j, k und m verschiedene Werte von zwei oder mehr als zwei annehmen können und dass das gezeigte Beispiel der Fig. 3 mit je drei Sensormodulen und je drei Sensoren nur beispielhafter Natur ist. Insbesondere ist es für das Inertialsensorsystem IMU nur wesentlich, dass eines der Inertialsensormodule B1, B2, ..., Bm mehr als einen Inertialsensor aufweist, um zumindest in einem der Inertialsensormodule B1, B2, ..., Bm eine Auswahl aus Inertialsensoren je nach Betriebsbedingungen zu ermöglichen. Die jeweils anderen Inertialsensormodule B1, B2, ..., Bm können unter Umständen nur einen einzigen Inertialsensor aufweisen. Beispielsweise kann das Inertialsensormodul B1 zwei Inertialsensoren C1, C2 aufweisen, aus denen eine Auswahl eines jeweils aktiven Inertialsensors getroffen werden kann, während andere der Inertialsensormodule B2, ..., Bm jeweils nur einen einzigen Inertialsensor D1 bzw. E1 aufweisen. Unter diesen Umständen kann in den Inertialsensormodulen mit nur einem einzigen Inertialsensor auf den Multiplexer MUX2, ... MUXm verzichtet werden und der Ausgang des einzigen Inertialsensors jeweils direkt mit dem Steuerprozessor P gekoppelt werden.

Die Inertialsensoren eines jeweiligen Inertialsensormoduls weisen zwar den gleichen Sensortyp auf, können aber einen unterschiedlichen Sensoraufbau und/oder unterschiedliche Messeigenschaften aufweisen. So können beispielsweise primäre Sensoren mit hoher Messgenauigkeit, aber großem Bauvolumen und/oder teurem Aufbau neben sekundären Sensoren mit geringer Messgenauigkeit, aber geringem Bauvolumen und/oder kostengünstigem Aufbau eingesetzt werden. Die Idee hinter dem Einsatz von mehreren unterschiedlichen Sensoren pro Sensortyp besteht darin, dass ein Einsatz eines Flugkörpers typischerweise in verschiedene Flugphasen mit stark unterschiedlichen Anforderungsprofilen eingeteilt werden können. Beispielsweise ist eine Abschussphase eine Phase hoher Beschleunigung und niedriger Drehrate. In einer derartigen Phase ist eine hohe Bandbreite bei Beschleunigungssensoren gefordert, während die Drehratensensoren zwar hoch vibrationsfest und beschleunigungsunabhängig messen sollen, deren Verzerrungseffekte aber aufgrund der kurzen Dauer der Abschussphase nur eine untergeordnete Rolle spielen. Demgegenüber ist eine auf die Abschussphase folgende Freiflugphase eine deutlich länger andauernde Phase, in der die Beschleunigungssensoren zwar eine geringere Bandbreite benötigen, aber dafür nur sehr geringe Verzerrungseffekte aufweisen sollten.

Ein zentraler Steuerprozessor P kann nun je nach Flugphase aus jedem der Inertialsensormodule B1, ..., Bm einen oder eine Untergruppe der in jedem Modul verfügbaren Inertialsensoren als die aktiven Inertialsensoren auswählen. Diese Auswahl hat den Vorteil, dass immer diejenigen Inertialsensoren mit den für die jeweilige Flugphase geeignetsten Leistungsparametern die tatsächlichen Messwerte liefern und damit die flugphasenabhängigen dominanten Fehlerterme optimal minimiert werden können. Diese Art der Adaption kann für unterschiedliche Leistungsparameter angewendet werden: Bandbreite, Vibrationsfestigkeit, Beschleunigungsfestigkeit, Messgenauigkeit, Temperaturabhängigkeit, Driftwert ("bias"), Langzeitstabilitätswert, oder Skalenfaktorfehlerwert bzw. Skalenfaktornichtlinearität. Damit ergeben sich pro Flugphase immer "virtuelle" Sensorsysteme aus Untergruppen von ausgewählten aktiven Inertialsensoren, die mit einem eigenen Satz an Kompensationsparametern angesteuert werden können.

Der zentrale Steuerprozessor P kann die Flugphase beispielsweise gemäß einer vorab vorgegebenen zeitlichen Sequenz bestimmen oder die Messdaten den Inertialsensoren selbst als Entscheidungsbasis heranziehen. Es kann auch möglich sein, dem zentralen Steuerprozessor P die jeweils aktuelle Flugphase durch eine externe Quelle über eine mit dem Steuerprozessor P gekoppelte Datenschnittstelle I/O anzugeben. Das Inertialsensorsystem IMU kann zudem eine Energieversorgungskomponente SV aufweisen, die die jeweiligen Inertialsensormodule bzw. deren Inertialsensoren mit elektrischer Energie versorgt. Die Energieversorgungskomponente SV kann ferner auch den zentralen Steuerprozessor P mit elektrischer Energie zu dessen Betrieb versorgen.

Das Inertialsensorsystem IMU kann über einen Speicher MEM verfügen, in dem Konfigurationsdatensätze zur Fehlerkompensation jedes der ersten und zweiten Inertialsensoren gespeichert sind. Der Steuerprozessor P kann die Auswahl der jeweils aktiven Inertialsensoren dann in in Abhängigkeit von den in dem Speicher MEM gespeicherten diese Kombination beschreibenden Konfigurationsdatensätzen vornehmen.

Die Auswahl der jeweils aktiven Inertialsensoren durch den Steuerprozessor P erfolgt über Mutliplexer MUX1, MUX2, ..., MUXm, die jeweils mit den Ausgängen der Inertialsensoren gekoppelt sind. Die Multiplexer MUX1, MUX2, ..., MUXm werden durch den Steuerprozessor P über Auswahlsignale Sel1, Sel2, ..., Selm angesteuert, um die jeweiligen Multiplexer MUX1, MUX2, ..., MUXm zur Ausgabe der Sensormesswerte O1, O2, ..., Om der jeweils ausgewählten Inertialsensoren zu veranlassen. Die Sensormesswerte O1, O2, ..., Om können dann an den Steuerprozessor P zur Weiterverarbeitung abgegeben werden.

Ein Verfahren zur flugphasenabhängigen Inertialsensormessung während des Fluges eines Flugkörpers, welches mit einem Inertialsensorsystem IMU der Fig. 3 durchgeführt werden kann, umfasst zunächst ein Bestimmen einer momentanen Flugphase des Flugkörpers. Je nach bestimmter Flugphase kann ein erster aktiver Inertialsensor von mindestens zwei ersten Inertialsensoren C1, ..., Ci eines ersten Inertialsensortyps in Abhängigkeit von der bestimmten Flugphase ausgewählt werden, beispielsweise ein Beschleunigungssensor. Gleichermaßen kann optional ein zweiter aktiver Inertialsensor von mindestens zwei zweiten Inertialsensoren D1, ..., Dj eines zweiten, von den erstem Inertialsensortyp verschiedenen Inertialsensortyps in Abhängigkeit von der bestimmten Flugphase ausgewählt werden, beispielsweise ein Drehratensensor. Die Sensormesswerte des einen aktiven Inertialsensors (bzw. optional der beiden aktiven Inertialsensoren) können dann in einem Steuerprozessor P pro Flugphase verarbeitet werden, beispielsweise indem der Steuerprozessor P die erfassten Beschleunigungssensormesswerte und Drehratensensormesswerte zur Berechnung der momentane Fluglage des Flugkörpers in einem Flugführungssystem weitergibt.

Die Fehlerparameter der zwei aktiven Inertialsensoren können dabei in Abhängigkeit von in einem mit dem Steuerprozessor P gekoppelten Speicher MEM gespeicherten, diese Kombination beschreibenden Konfigurationsdatensätzen kompensiert werden.

Während des Fluges des Flugkörpers kann der Steuerprozessor P natürlich überwachen, ob der Flugkörper in eine nächste Flugphase eintritt. Wenn das der Fall ist, können neue erste und zweite aktive Inertialsensoren in Abhängigkeit von der Flugphase, in die der Flugkörper aktuell gerade eingetreten ist, ausgewählt werden. Der Steuerprozessor P verwendet dann die Sensormesswerte der zwei neuen aktiven Inertialsensoren zur Weiterverarbeitung.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Inertialsensorsystem (20) für den Einsatz in einem Trägheitsnavigationssystem eines Flugkörpers (40), umfassend:
ein erstes Inertialsensorbasismodul (1), welches mindestens zwei erste Inertialsensoren (15a, ..., 15d) eines ersten Inertialsensortyps und mindestens zwei zweite Inertialsensoren (16a, ..., 16d) eines zweiten, von den erstem Inertialsensortyp verschiedenen Inertialsensortyps aufweist;
ein zweites Inertialsensorbasismodul (2), welches mindestens zwei erste Inertialsensoren (15a, ..., 15d) des ersten Inertialsensortyps und mindestens zwei zweite Inertialsensoren (16a, ..., 16d) des zweiten, von den erstem Inertialsensortyp verschiedenen Inertialsensortyps aufweist; und
ein systemübergreifendes Steuersystem (21) mit einem zentralen Steuerprozessor (12b), welcher mit dem ersten Inertialsensorbasismodul (1) und dem zweiten Inertialsensorbasismodul (2) gekoppelt ist, und welcher dazu ausgelegt ist, Sensormesswerte der ersten und zweiten Inertialsensoren des ersten Inertialsensorbasismoduls (1) mit den Sensormesswerten der ersten und zweiten Inertialsensoren des zweiten Inertialsensorbasismoduls (2) zu plausibilisieren;
wobei die ersten und zweiten Inertialsensorbasismodule (1, 2) jeweils einen Steuerprozessor (12a) aufweisen, welcher dazu ausgelegt ist, die Sensormesswerte der ersten und zweiten Inertialsensoren zu verarbeiten und als Ausgabe über eine Systemschnittstelle (13), mit welcher der zentrale Steuerprozessor (12b) verbunden ist, dem zentralen Steuerprozessor (12b) zur Verfügung zu stellen; **dadurch gekennzeichnet, dass** in dem zentralen Steuerprozessor (12b) eine "lock step"-Funktionalität implementiert ist, welche dazu eingerichtet ist, eine Ausgabe eines gesamten Sensorausgabewertes durch den zentralen Steuerprozessor (12b) erst dann zu veranlassen, wenn die Steuerprozessoren (12a) der einzelnen Inertialsensormodule (1, 2) als fehlerfrei abgeglichene Ausgabedaten pro Messperiode ausgegeben haben.

2. Inertialsensorsystem (20) gemäß Anspruch 1, wobei die ersten und zweiten Inertialsensorbasismodule (1, 2) jeweils auf einer im Wesentlichen planaren Platine (18b) implementiert sind, die über Systemschnittstellen (13) untereinander gekoppelt sind.

3. Inertialsensorsystem (20) gemäß Anspruch 2, wobei die ersten und zweiten Inertialsensorbasismodule (1, 2) entlang der Flächennormalen der im Wesentlichen planaren Platinen (18b) gestapelt sind.

4. Inertialsensorsystem (20) gemäß Anspruch 3, wobei das systemübergreifende Steuersystem (21) auf einer im Wesentlichen planaren Platine implementiert ist und entlang der Flächennormalen der im Wesentlichen planaren Platine über oder unter den Inertialsensorbasismodulen gestapelt ist.

5. Inertialsensorsystem (20) gemäß einem der Ansprüche 1 bis 4, wobei der erste Inertialsensortyp Beschleunigungssensoren und der zweite Inertialsensortyp Drehratensensoren umfasst.

6. Inertialsensorsystem (20) gemäß einem der Ansprüche 1 bis 5, wobei das Plausibilisieren der Sensormesswerte der ersten und zweiten Inertialsensorbasismodule (1, 2) durch den zentralen Steuerprozessor (12b) die Wahrscheinlichkeit, einen Fehler in den Sensormesswerten bei der Inertialsensormessung erkennen zu können, signifikant erhöht.

7. Inertialsensorsystem (20) gemäß einem der Ansprüche 1 bis 6, wobei der zentrale Steuerprozessor (12b) zur Implementierung der "lock step"-Funktionalität zwei Rechenkerne aufweist, die dazu eingerichtet sind, parallel die gleichen Befehle abzuarbeiten und deren Ergebnisse kreuzkorreliert zu prüfen.

8. Flugkörper (40) mit einem Inertialsensorsystem (20) gemäß einem der Ansprüche 1 bis 7.

## Claims

1. Inertial sensor system (20) for use in an inertial navigation system of a missile (40), said inertial sensor system comprising:
a first inertial sensor base module (1) that comprises at least two first inertial sensors (15a, ..., 15d) of a first inertial sensor type and at least two second inertial sensors (16a, ..., 16d) of a second inertial sensor type that is different from the first inertial sensor type;
a second inertial sensor base module (2) that comprises at least two first inertial sensors (15a, ..., 15d) of the first inertial sensor type and at least two second inertial sensors (16a, ..., 16d) of the second inertial sensor type that is different from the first inertial sensor type; and
a cross-system control system (21) having a central control processor (12b) that is coupled to the first inertial sensor base module (1) and to the second inertial sensor base module (2), and said central control processor is designed for the purpose of performing a plausibility check on sensor measured values of the first and second inertial sensors of the first inertial sensor base module (1) using the sensor measured values of the first and second inertial sensors of the second inertial sensor base module (2);
wherein the first and second inertial sensor base modules (1, 2) in each case comprise a control processor (12a) that is designed for the purpose of processing the sensor measured values of the first and second inertial sensors and making said sensor measured values available to the central control processor (12b) as an output via a system interface (13) that the central control processor (12b) is connected to; **characterised in that**
a "lock step" functionality is implemented in the central control processor (12b) and said lock step functionality is configured so as to trigger an output of an entire sensor output value by means of the central control processor (12b) only if the control processors (12a) of the individual inertial sensor modules (1, 2) have output, as error-free adjusted, output data per measuring period.

2. Inertial sensor system (20) in accordance with claim 1, wherein the first and second inertial sensor base modules (1, 2) are implemented in each case on an essentially planar circuit board (18b) that are coupled to one another via system interfaces (13).

3. Inertial sensor system (20) in accordance with claim 2, wherein the first and second inertial sensor base modules (1, 2) are stacked along the surface normal of the essentially planar circuit boards (18b).

4. Inertial sensor system (20) in accordance with claim 3, wherein the cross-system control system (21) is implemented on an essentially planar circuit board and is stacked along the surface normals of the essentially planar circuit board above or below the inertial sensor base modules.

5. Inertial sensor system (20) in accordance with one of claims 1 to 4, wherein the first inertial sensor type comprises acceleration sensors and the second inertial sensor type comprises rotational speed sensors.

6. Inertial sensor system (20) in accordance with one of claims 1 to 5, wherein the plausibility check on the sensor measured values of the first and second inertial sensor base modules (1, 2) by means of the central control processor (12b) significantly increases the probability of being able to identify an error in the sensor measured values in the case of the inertial sensor measurement.

7. Inertial sensor system (20) in accordance with one of claims 1 to 6, wherein the central control processor (12b) comprises two computer cores for the implementation of the "lock step" functionality and said computer cores are configured so as to process the same commands in parallel and to check the results of said processing in a cross-correlated manner.

8. Missile (40) having an inertial sensor system (20) in accordance with one of claims 1 to 7.

## Revendications

1. Système de capteurs inertiels (20) destiné à être utilisé dans un système de navigation inertielle d'un missile (40), comprenant :
un premier module de base de capteurs inertiels (1) présentant au moins deux premiers capteurs inertiels (15a, ..., 15d) d'un premier type de capteur inertiel et au moins deux seconds capteurs inertiels (16a, .... 16d) d'un second type de capteur inertiel différent du premier type de capteur inertiel ;
un second module de base de capteurs inertiels (2) présentant au moins deux premiers capteurs inertiels (15a, ..., 15d) du premier type de capteur inertiel et au moins deux seconds capteurs inertiels (16a, ..., 16d) du second type de capteur inertiel différent du premier type de capteur inertiel ; et
un système de commande de système (21) comprenant un processeur de commande central (12b) qui est couplé au premier module de base de capteurs inertiels (1) et au second module de base de capteurs inertiels (2) et qui est conçu pour plausibiliser les valeurs de mesure de capteur des premiers et seconds capteurs inertiels du premier module de base de capteurs inertiels (1) avec les valeurs de mesure de capteur des premiers et seconds capteurs inertiels du second module de base de capteurs inertiels (2) ;
dans lequel les premier et second modules de base de capteurs inertiels (1, 2) présentent chacun un processeur de commande (12a) qui est conçu pour traiter les valeurs de mesure de capteur des premiers et seconds capteurs inertiels et pour les mettre à la disposition du processeur de commande central (12b) en tant que sortie via une interface de système (13) à laquelle le processeur de commande central (12b) est relié ;
**caractérisé en ce**
**qu'**une fonctionnalité « lock step » est mise en œuvre dans le processeur de commande central (12b), laquelle est conçue pour faire en sorte que le processeur de commande central (12b) ne délivre une valeur de sortie de capteur totale qu'après que les processeurs de commande (12a) des modules de capteurs inertiels individuels (1, 2) ont délivré des données de sortie en tant que parfaitement concordantes par période de mesure.

2. Système de capteurs inertiels (20) selon la revendication 1, dans lequel les premier et second modules de base de capteurs inertiels (1, 2) sont mis en œuvre sur des cartes de circuit imprimé sensiblement planes respectives (18b) qui sont couplées l'une à l'autre via des interfaces de système (13).

3. Système de capteurs inertiels (20) selon la revendication 2, dans lequel les premier et second modules de base de capteurs inertiels (1, 2) sont empilés le long des normales à la surface des cartes de circuit imprimé sensiblement planes (18b).

4. Système de capteurs inertiels (20) selon la revendication 3, dans lequel le système de commande de système (21) est mis en œuvre sur une carte de circuit imprimé sensiblement plane et est empilé le long des normales à la surface de la carte de circuit imprimé sensiblement plane au-dessus ou au-dessous des modules de base de capteurs inertiels.

5. Système de capteurs inertiels (20) selon l'une des revendications 1 à 4, dans lequel le premier type de capteur inertiel comprend des capteurs d'accélération et le second type de capteur inertiel comprend des capteurs de vitesse angulaire.

6. Système de capteurs inertiels (20) selon l'une des revendications 1 à 5, dans lequel la plausibilisation des valeurs de mesure de capteur des premier et second modules de base de capteurs inertiels (1, 2) par le processeur de commande central (12b) augmente significativement la probabilité de pouvoir détecter une erreur dans les valeurs de mesure de capteur lors de la mesure des capteurs inertiels.

7. Système de capteurs inertiels (20) selon l'une des revendications 1 à 6, dans lequel le processeur de commande central (12b) pour la mise en œuvre de la fonctionnalité « lock step » présente deux cœurs de calcul qui sont conçus pour traiter les mêmes instructions en parallèle et pour vérifier leurs résultats par corrélation croisée.

8. Missile (40) doté d'un système de capteurs inertiels (20) selon l'une des revendications 1 à 7.
